(19) **Europäisches Patentamt / European Patent Office / Office européen des brevets**

(11) **EP 4 264 205 B1**

(12) **FASCICULE DE BREVET EUROPEEN**

(45) Date de publication et mention de la délivrance du brevet:
**17.07.2024 Bulletin 2024/29**

(21) Numéro de dépôt: **21836409.9**

(22) Date de dépôt: **09.12.2021**

(51) Classification Internationale des Brevets (IPC):
**G01H 1/00** *(2006.01)* **G01M 15/14** *(2006.01)*
**G01M 13/028** *(2019.01)*

(52) Classification Coopérative des Brevets (CPC):
**G01H 1/003; G01M 13/028; G01M 15/14**

(86) Numéro de dépôt international:
**PCT/EP2021/084909**

(87) Numéro de publication internationale:
**WO 2022/128717 (23.06.2022 Gazette 2022/25)**

(54) **PROCÉDÉ ET SYSTÈME DE DÉTERMINATION D'UN OU PLUSIEURS DÉFAUTS D'UNE MACHINE TOURNANTE D'AÉRONEF**

VERFAHREN UND SYSTEM ZUR BESTIMMUNG EINES ODER MEHRERER DEFEKTE IN EINER DREHMASCHINE EINES FLUGZEUGS

METHOD AND SYSTEM FOR DETERMINING ONE OR MORE DEFECTS IN A ROTATING MACHINE OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2020 FR 2013249**

(43) Date de publication de la demande:
**25.10.2023 Bulletin 2023/43**

(73) Titulaire: **Safran Ventilation Systems**
**31700 Blagnac (FR)**

(72) Inventeurs:
- **CAULE, Patrice**
  **77550 Moissy-Cramayel (FR)**
- **EDET, Alexandre**
  **77550 Moissy-Cramayel (FR)**

(74) Mandataire: **Argyma**
**14 Boulevard de Strasbourg**
**31000 Toulouse (FR)**

(56) Documents cités:
**EP-A1- 2 693 176    WO-A1-2018/222341**
**FR-A1- 2 952 177**

**Description**

**Domaine technique**

La présente invention concerne le domaine de la surveillance des défauts d'une machine tournante d'aéronef. L'invention s'applique notamment à une machine tournante comprenant au moins un équipement électrique, en particulier, un moteur électrique.

De manière connue, une machine tournante est équipée de différents capteurs afin de déterminer des défauts connus d'une machine tournante. Par exemple, un capteur de vibration peut être utilisé pour déterminer un balourd, un capteur acoustique peut être utilisé pour déterminer un défaut d'un palier de roulement ou un capteur électrique peut être utilisé pour détecter un défaut électrique d'un générateur d'énergie électrique de la machine tournante.

L'utilisation de tels capteurs est robuste pour déterminer un défaut « simple », c'est-à-dire, ayant une unique cause et un unique effet. En pratique, un défaut d'une machine tournante peut affecter, avec un degré faible, de nombreux composants de la machine tournante (plusieurs effets). Un tel défaut « complexe » ou « réparti » est plus difficile à déterminer étant donné qu'il est difficilement identifiable par un des capteurs. Il en va de même de la combinaison de défauts « purs » ou « complexes » (plusieurs causes). Un des objectifs de la présente invention est de permettre de détecter tous les défauts qui peuvent survenir simultanément ou qui peuvent avoir des manifestations multiples, c'est-à-dire, vibratoires, acoustiques ou électriques.

A titre d'exemple, par analyse fréquentielle, il peut être observé un défaut périodique ayant une première fréquence qui peut correspondre à un balourd d'un arbre de la machine tournante et un autre défaut électrique ayant une deuxième fréquence de valeur proche de la première fréquence. Il est difficile pour un opérateur de déterminer s'il est confronté à un unique défaut ou à deux défauts différents.

En pratique, pour traiter la mesure d'un capteur, il est connu de déterminer le spectre fréquentiel, en particulier par une transformée de Fourrier, afin de vérifier la présence d'une éventuelle signature aux fréquences caractéristiques de la machine. Une telle détermination est difficile à haute fréquence étant donné que le spectre est étalé et il est difficile d'isoler précisément la signature d'un défaut. Cette imprécision entraine une imprécision du diagnostic des défauts. Cette détermination est difficile sur les signaux forts (défauts très prononcés) mais elle est encore plus difficile sur les signaux latents (défauts peu prononcés) qui sont alors confondus avec le bruit large bande ou avec des raies spectrales très proches. De manière classique, la présence/sévérité d'un défaut n'est pas déterminée de manière précise mais estimée sur une plage de fréquence, ce qui rend impossible de déterminer distinctement deux défauts ayant des plages de fréquence qui se chevauchent.

Il existe un besoin pour identifier de manière précoce et fiable les défauts d'une machine tournante qu'ils soient purs, complexes, indépendants ou combinés.

On connait dans l'art antérieur par les demandes de brevet WO2018/222341A1, EP2693176A1 et FR2952177A1 des procédés de détermination de défauts d'une machine tournante.

**PRESENTATION DE L'INVENTION**

L'invention concerne un procédé de détermination d'un ou plusieurs défauts d'une machine tournante d'aéronef, le procédé comportant :

- une étape de mesure d'au moins un signal acoustique et d'au moins un signal vibratoire au cours d'une même phase de fonctionnement de la machine tournante,
- une étape de transformation de chaque signal acoustique et de chaque signal vibratoire respectivement en un spectre de fréquence acoustique et un spectre de fréquence vibratoire de manière à obtenir un ensemble de spectres de fréquence,
- une étape de détermination d'un jeu de fréquences d'intérêt dans l'ensemble des spectres de fréquence, chaque fréquence d'intérêt appartenant à une plage de fréquence prédéterminée,
- une étape de formation d'une base de spectres de défaut, chaque spectre de défaut comportant au moins une raie fréquentielle, chaque raie fréquentielle étant obtenue par combinaison linéaire de fréquences d'intérêt dont les coefficients de pondération sont prédéterminés,
- une étape de comparaison de chaque spectre de fréquence à chaque spectre de défaut de manière à obtenir un score et
- une étape de détermination du ou des défauts de la machine tournante par analyse des scores obtenus.

Grâce à l'invention, on détermine de manière très précise le jeu de fréquences d'intérêt en s'appuyant sur des signaux acoustiques et vibratoires. La nature différente des signaux permet avantageusement d'éviter un biais dans une des mesures. Une précision de 0,1 Hz est obtenue, ce qui permet de déterminer une fréquence d'intérêt de manière précise et non sur une plage de fréquence comme dans l'art antérieur. On peut ainsi former une base de spectres de défaut par combinaison linéaire de fréquences d'intérêt qui est pertinente. En effet, du fait de la précision des fréquences d'intérêt, le spectre de défaut peut comprendre des fréquences (raies) qui sont très proches les unes des autres et qui sont caractéristiques de défauts particuliers. Comme chaque fréquence d'intérêt est très précise, les harmoniques (multiple d'une fréquence d'intérêt) sont également déterminées précisément.

De plus, la comparaison de chaque spectre de fréquence à chaque spectre de défaut permet d'obtenir un panorama général de l'importance de chaque défaut. Le bruit tonal d'un spectre de fréquence peut ainsi être aisément traité pour identifier des défauts.

La nature hétérogène des défauts répertoriés dans la base de spectres de défaut permet d'obtenir une fiabilité et une robustesse élevée. Le procédé selon l'invention permet de déterminer des défauts forts mais également des défauts masqués ou des défauts latents. Un opérateur peut ainsi déterminer les causes de dysfonctionnement d'une machine tournante étant donné qu'il dispose simultanément d'informations sur la composante acoustique et vibratoire de chaque défaut.

De manière préférée, chaque fréquence d'intérêt correspond à une fréquence fondamentale.

De manière préférée, au cours de l'étape de comparaison d'un spectre de fréquence à un spectre de défaut déterminé de manière à obtenir un score, on calcule un score élémentaire dans le spectre de fréquence pour chaque fréquence d'intérêt pondérée du spectre de défaut déterminé et on détermine le score à partir de l'ensemble des scores élémentaires.

Grâce à la précision de la détermination de chaque fréquence d'intérêt, on peut vérifier si chaque raie fréquentielle d'un spectre de défaut est présente dans le spectre de fréquence. Une telle comparaison n'était pas possible dans l'art antérieur étant donné que les fréquences étaient connues de manière imprécise. Grâce à l'invention, si le spectre de défaut comporte deux raies fréquentielles qui sont proches de quelques Hz, on mesure deux scores élémentaires indépendants, ce qui améliore la pertinence de la détermination du défaut.

De préférence, la machine tournante d'aéronef comportant au moins un équipement électrique, le procédé comporte :

- une étape de mesure d'au moins un signal acoustique, d'au moins un signal électrique et d'au moins un signal vibratoire au cours d'une même phase de fonctionnement de la machine tournante, et
- une étape de transformation de chaque signal acoustique, de chaque signal électrique et chaque signal vibratoire respectivement en un spectre de fréquence acoustique, un spectre de fréquence électrique et un spectre de fréquence vibratoire de manière à obtenir un ensemble de spectres de fréquence.

L'utilisation de signaux électriques en combinaison avec des signaux vibratoires et des signaux acoustiques est pertinente étant donné qu'elle permet de révéler des défauts répartis ou combinés. On obtient un plus grand nombre de spectres de fréquence pour améliorer la précision lors de la détermination d'une fréquence d'intérêt et pour déterminer des défauts hétérogènes.

De manière préférée, le signal électrique est mesuré dans l'équipement électrique, de préférence, dans un moteur électrique.

De manière préférée, au cours de l'étape de détermination d'un jeu de fréquences d'intérêt, au moins deux spectres de fréquence étant fonction d'au moins une fréquence d'intérêt :

- on détermine une première estimation de la fréquence d'intérêt dans un premier spectre de fréquence,
- on détermine une deuxième estimation de la fréquence d'intérêt dans un deuxième spectre de fréquence et
- on détermine la fréquence d'intérêt à partir d'au moins la première estimation de la fréquence d'intérêt et de la deuxième estimation de la fréquence d'intérêt

Grâce à l'invention, on utilise aux moins deux spectres de fréquence pour obtenir des estimations indépendantes d'une fréquence d'intérêt. Cela permet de réduire l'imprécision lors de sa détermination, en particulier, en éliminant des biais ou des écueils dans l'interprétation des fréquences d'intérêt. De manière préférée, les deux spectres de fréquence sont de natures différentes.

De manière préférée, l'étape de détermination d'un jeu de fréquences d'intérêt est réalisée à partir d'une base de liaison qui associe au moins chaque fréquence d'intérêt à un ou plusieurs spectres de fréquence. Une telle base de liaison permet de déterminer dans quels spectres de fréquence une fréquence d'intérêt doit être recherchée. Une telle base de liaison est de préférence obtenue par des calculs analytiques ou par retour d'expérience.

De préférence, la base de liaison associe au moins chaque fréquence d'intérêt à un ou plusieurs spectres de fréquence avec un facteur de pondération. Un facteur de pondération permet de calibrer la pertinence d'une fréquence d'intérêt dans un spectre de fréquence. Ainsi, si le premier spectre de fréquence possède un facteur de pondération plus élevé que le deuxième spectre de fréquence, la première estimation de la fréquence d'intérêt sera prise en compte de manière plus importante dans la détermination de la fréquence d'intérêt. Ainsi, un spectre de fréquence plus représentatif d'une fréquence d'intérêt est mis en avant.

De préférence, chaque fréquence d'intérêt est recherchée dans chaque spectre de fréquence, chaque fréquence d'intérêt obtenue étant pondérée en fonction de la pertinence du spectre de fréquence pour ladite fréquence d'intérêt. Ainsi, on utilise l'ensemble des spectres de fréquence pour limiter les biais. Plus le nombre de spectres de fréquence est élevé, plus la précision est grande.

Selon un aspect de l'invention, au cours de l'étape de détermination d'un jeu de fréquences d'intérêt sur la plage de fréquence prédéterminée,

- on calcule une moyenne glissante sur un spectre de fréquence en définissant une fenêtre de valeur fixe prédéterminée.
- on retire la moyenne glissante fixe du spectre de fréquence pour déterminer au moins un pic correspondant à une fréquence d'intérêt.

Le calcul d'une moyenne glissante fixe est rapide et pratique lorsque les pics du spectre de fréquence sont étroits (définis précisément), en particulier, pour des fréquences faibles et moyennes.

Selon un autre aspect de l'invention, au cours de l'étape de détermination d'un jeu de fréquences d'intérêt sur la plage de fréquence prédéterminée,

- on détecte les pics les plus émergents d'un spectre de fréquence,
- on mesure pour chaque pic sa largeur à sa fréquence afin de former un échantillon,
- on effectue une régression linéaire à partir des échantillons de manière à déterminer l'évolution de la largeur des pics en fonction de la fréquence,
- on calcule une moyenne glissante sur le spectre de fréquence en définissant une fenêtre de valeur variable déterminée à partir de la régression linéaire,
- on retire la moyenne glissante variable du spectre de fréquence pour déterminer au moins un pic correspondant à une fréquence d'intérêt.

Le calcul d'une moyenne glissante variable, qui est fonction de l'évolution de la largeur des pics en fonction de la fréquence, permet d'enlever tout le bruit de manière efficace pour mettre en exergue les pics du spectre de fréquence, en particulier, pour des fréquences élevées.

L'invention concerne également un système pour la détermination d'un ou plusieurs défauts d'une machine tournante d'aéronef, le système comportant :

- au moins un capteur acoustique et au moins un capteur vibratoire configurés pour mesurer respectivement au moins un signal acoustique et au moins un signal vibratoire au cours d'une même phase de fonctionnement de la machine tournante,
- au moins un calculateur configuré pour :

  transformer chaque signal acoustique et chaque signal vibratoire respectivement en un spectre de fréquence acoustique et un spectre de fréquence vibratoire de manière à obtenir un ensemble de spectres de fréquence,
  déterminer un jeu de fréquences d'intérêt dans l'ensemble des spectres de fréquence, chaque fréquence d'intérêt appartenant à un plage de fréquence prédéterminée,
  former une base de spectres de défaut, chaque spectre de défaut comportant au moins une raie fréquentielle, chaque raie fréquentielle étant obtenue par combinaison linéaire de fréquences d'intérêt dont les coefficients de pondération sont prédéterminés,
  comparer chaque spectre de fréquence à chaque spectre de défaut de manière à obtenir un score et
  déterminer un ou des défauts d'une machine tournante par analyse des scores obtenus.

L'invention concerne aussi une machine tournante d'aéronef comportant un système tel que présenté précédemment. Autrement dit, le procédé de détermination de défaut peut être mis en oeuvre de manière embarquée.

## PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.

[Fig.1] La [Fig.1] est une représentation schématique d'un aéronef comportant des machines tournantes équipées de capteurs de différentes natures.

[Fig.2] La [Fig.2] est une représentation schématique des étapes d'un procédé de détermination de défauts selon un exemple de mise en oeuvre de l'invention.

[Fig.3] La [Fig.3] est une autre représentation schématique de trois spectres de défaut avec leurs raies.

[Fig.4A] La [Fig.4A] est une représentation schématique de la comparaison d'un premier spectre acoustique aux raies d'un premier spectre de défaut.

[Fig.4B] La [Fig.4B] est une représentation schématique de la comparaison d'un premier spectre acoustique aux raies d'un deuxième spectre de défaut.

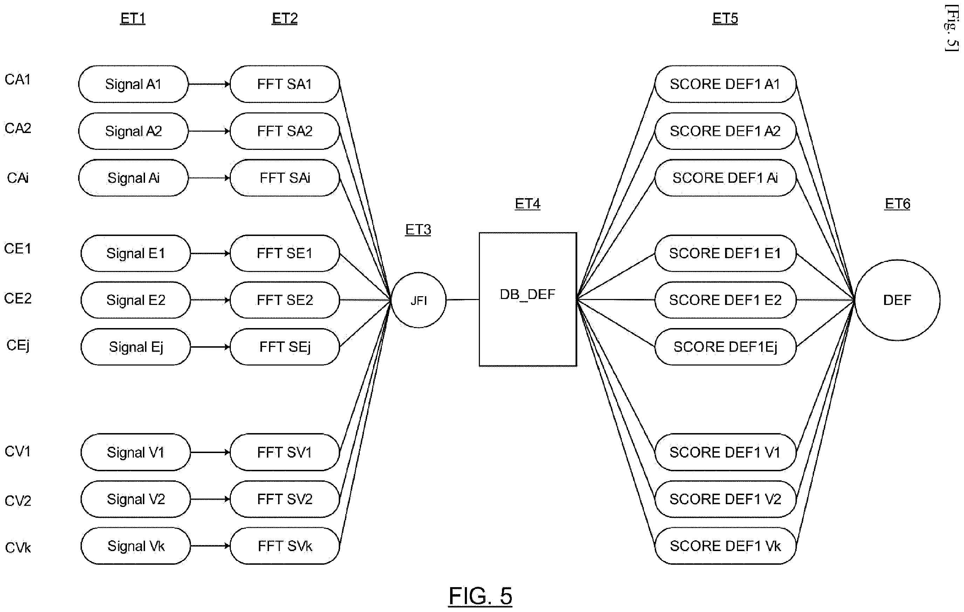

[Fig.5] La [Fig.5] est une autre représentation schématique des étapes d'un procédé de détermination de défauts selon un exemple de mise en oeuvre de l'invention.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

L'invention concerne une machine tournant pour aéronef, notamment un avion ou un hélicoptère. L'invention va être présentée en particulier pour une machine tournante qui comporte un équipement électrique, en particulier, un moteur électrique qui prélève de l'énergie mécanique sur au moins un arbre de la machine tournante. Il va de soi que l'invention s'applique également à une machine tournante dépourvue d'équipement électrique.

Par machine tournante, on entend aussi bien une turbine, un moteur rotatif, un générateur, une pompe, un réducteur, un agitateur, un réacteur, un compresseur, une boîte de vitesse, un ventilateur, une turbomachine, un turbocompresseur ou autre.

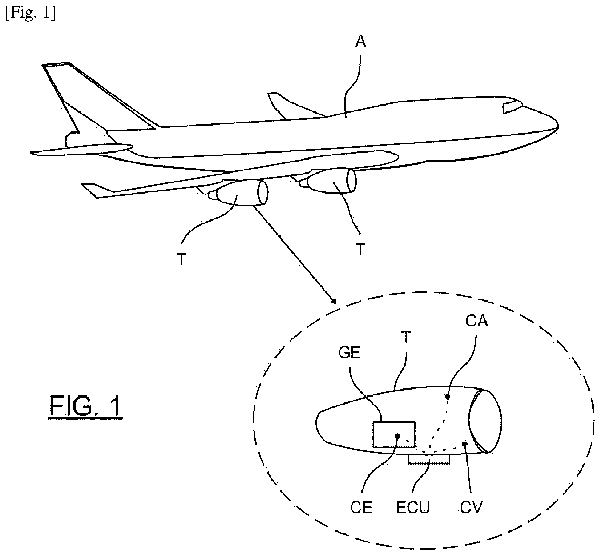

En référence à la [Fig. 1], il est représenté un aéronef A équipé de deux machines tournantes T, en particulier, des turbomoteurs. Dans cet exemple, chaque machine tournante T comporte une pluralité de capteurs de mesure, en particulier, au moins un capteur électrique CE, au moins un capteur acoustique CA et au moins un capteur vibratoire CV. La machine tournante T comporte un générateur électrique GE comportant au moins un organe statorique et au moins un organe rotorique monté rotatif par rapport à l'organe statorique. L'organe rotorique comporte un nombre déterminé de pôles.

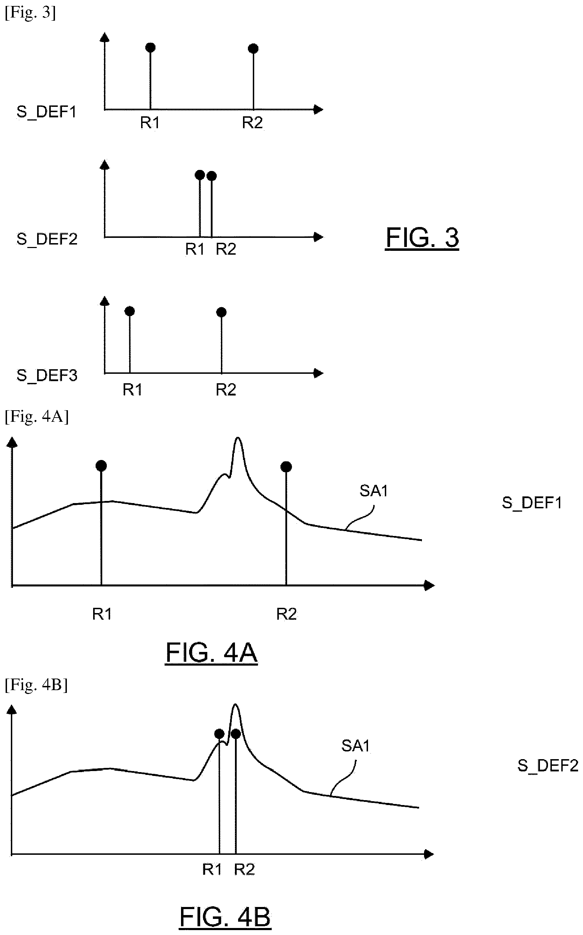

Dans l'exemple de la [Fig.1], par souci de clarté et de concision, il est uniquement représenté un capteur de chaque type mais il va de soi qu'ils pourraient être plus nombreux. Par la suite, en référence à la [Fig.3], les capteurs CE, CA, CV sont configurés pour acquérir des mesures, en particulier, un nombre i (i étant un entier naturel) de signaux acoustiques Ai, un nombre j (j étant un entier naturel) de signaux électriques Ej et un nombre k (k étant un entier naturel) de signaux vibratoires Vk.

De préférence, chaque capteur acoustique CAi est configuré pour mesurer un unique signal acoustique Ai et il en va de manière analogue de chaque capteur électrique CEj et de chaque capteur vibratoire CVk pour mesurer respectivement un unique signal électrique Ej et un unique signal vibratoire Vk.

De manière préférée, les signaux Ai, Ej, Vk sont stockés dans une mémoire informatique lors des vols de l'aéronef pour être traités par la suite, notamment au sol. De manière alternative, l'aéronef comporte un calculateur embarqué pour le traitement des signaux Ai, Cj, Vk en temps réel.

En référence à la [Fig.1], la machine tournante T comporte au moins un calculateur ECU configuré pour réaliser plusieurs fonctions calculatoires lors de la mise en oeuvre du procédé, en particulier :

- transformer chaque signal acoustique, chaque signal électrique et chaque signal vibratoire respectivement en un spectre de fréquence acoustique, un spectre de fréquence électrique et un spectre de fréquence vibratoire de manière à obtenir un ensemble de spectres de fréquence,
- déterminer un jeu de fréquences d'intérêt dans l'ensemble des spectres de fréquence, chaque fréquence d'intérêt appartenant à un plage de fréquence prédéterminée,
- former une base de spectres de défaut, chaque spectre de défaut comportant au moins une raie fréquentielle, chaque raie fréquentielle étant obtenue par combinaison linéaire de fréquences d'intérêt dont les coefficients de pondération sont prédéterminés,

- comparer chaque spectre de fréquence à chaque spectre de défaut de manière à obtenir un score et

- déterminer un ou des défauts de la machine tournante T par analyse des scores obtenus.

Ces étapes calculatoires vont être présentées de manière détaillée par la suite.

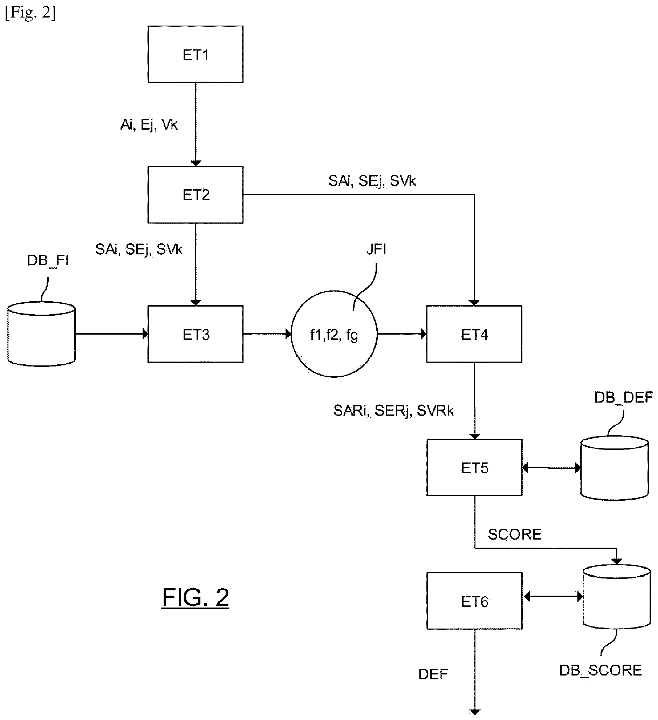

Un procédé de détermination de défauts d'une machine tournante T va être dorénavant présenté en référence à la [Fig.2] qui illustre de manière schématique les étapes ET1-ET6 du procédé.

Dans cet exemple, grâce aux capteurs CA, CE, CV, le procédé comporte une étape de mesure ET1 de signaux acoustique Ai, de signaux électrique Ej et de signaux vibratoire Vk au cours d'une même phase de fonctionnement de la machine tournante T. Les signaux Ai, Ej, Vk sont des signaux temporels connus de l'homme du métier.

Parmi les phases de fonctionnement d'une machine tournante T, cela peut être notamment, une phase de taxi, de décollage, de croisière ou d'atterrissage. Une acquisition au cours d'une même phase permet de caractériser de manière robuste des défauts étant donné que certains défauts sont mis en exergue en fonction des conditions mécaniques, thermiques ou thermodynamiques de la machine tournante T.

De préférence, les signaux Ai, Ej, Vk sont mesurés de manière simultanée pour posséder une corrélation les uns avec les autres. Cela permet de faciliter la détermination de fréquences d'intérêt comme cela sera présenté par la suite. Suite à leur acquisition, les signaux Ai, Ej, Vk sont bruités (bruit large bande) du fait du contexte d'utilisation de la machine tournante T qui sont ainsi difficilement exploitables en tant que tel. De plus, de manière individuelle, le bruit tonal de chaque signal (fréquences fondamentales et harmoniques) sont difficiles à déterminer.

En référence à la [Fig.2], le procédé comporte une étape de transformation ET2 des signaux Ai, Ej, Vk en spectres de fréquence SAi, SEj, SVk. Autrement dit, le procédé comporte une transformation de chaque signal acoustique Ai, de chaque signal électrique Ej et de chaque signal vibratoire Vk respectivement en un spectre de fréquence acoustique SAi, un spectre de fréquence électrique SEj et un spectre de fréquence vibratoire SVk de manière à obtenir un ensemble de spectres de fréquence. Une telle transformation dans le domaine fréquentiel est de préférence réalisée par une transformation de Fourrier mais il va de soi qu'elle pourrait être réalisée de manière différente.

De manière connue, un spectre de fréquence comporte des données primaires (bruit tonal) qui correspondent aux fréquences fondamentales et harmoniques ainsi que des données secondaires (bruit large bande, équipements connexes) qui bruitent les données primaires.

Selon l'invention, en référence à la [Fig.2], le procédé comporte une étape une détermination ET3 d'un jeu de fréquences d'intérêt JFI dans l'ensemble des spectres de fréquence SAi, SEj, SVk.

De manière préférée, le jeu de fréquences d'intérêt JFI comporte des fréquences d'intérêt f1, f2, fg (g étant un entier naturel) qui sont prédéterminées pour chaque machine tournante T et qui appartiennent respectivement à des plages de fréquence prédéterminées PFg.

Dans cet exemple, la machine tournante T est à double corps et comporte un arbre basse pression, un arbre haute pression, un compresseur basse pression, un compresseur haute pression, une chambre de combustion, une turbine haute pression et une turbine basse pression.

Au moins un spectre de fréquence est fonction d'au moins une fréquence d'intérêt, de préférence, de plusieurs fréquences d'intérêt. De manière avantageuse, en référence à la figure on dispose d'une base de liaison DB_FI qui associe à chaque fréquence d'intérêt fg, un ou plusieurs spectres de fréquence SAi, SEj, SVk.

A titre d'exemple, le premier spectre acoustique SA1 comporte une première fréquence d'intérêt f1 qui correspond à la fréquence de rotation de l'arbre basse pression tandis que le premier spectre électrique SE1 comporte la première fréquence d'intérêt f1 mais également une deuxième fréquence d'intérêt f2 qui correspond à une fréquence d'un organe rotorique du générateur électrique. Le premier spectre vibratoire SV1 comporte également la deuxième fréquence d'intérêt f2. Cet exemple est donné uniquement à titre d'illustration et il va de soi que les combinaisons entre spectres de fréquence et fréquences d'intérêt pourraient être diverses.

Autrement dit, chaque fréquence d'intérêt est associée à un ou plusieurs spectres de fréquence. Une ou plusieurs fréquences d'intérêt fg peuvent apparaitre nettement dans un spectre de fréquence (fréquence d'amplitude importante et/ou éloignée des autres fréquences). A l'inverse, d'autre fréquences d'intérêt peuvent être plus difficiles à déterminer (fréquence d'amplitude faible, présence de bruit et/ou proche des autres fréquences).

De manière préférée, la base de liaison DB_FI associe chaque fréquence d'intérêt fg à un ou plusieurs spectres de fréquence avec un facteur de pondération $\delta$. Dans cet exemple, la base de liaison DB_FI comporte pour chaque fréquence d'intérêt f1, f2 au moins un spectre de fréquence SA1, SE1, SV1 associé à un facteur de pondération $\delta$. De manière préférée, la base de liaison DB_FI comporte une valeur théorique de chaque fréquence d'intérêt f1, f2, ce qui facilite leur détermination dans les spectres de fréquence en définissant une fenêtre de recherche (plage de fréquence déterminée).

Dans cet exemple, la base de liaison DB_FI comporte les associations suivantes.

- f1 : [SA1 ;$\delta$1] ; [SE1 ;$\delta$2] pour la plage de fréquence PF1
- f2 : [SE1 ;$\delta$3] ; [SV1 ;$\delta$4] pour la plage de fréquence PF2

Pour chaque fréquence d'intérêt prédéterminée f1, f2, on recherche la fréquence dans les spectres de fréquence associés. Dans cet exemple, la première fréquence d'intérêt prédéterminée f1 est recherchée, d'une part, dans le premier spectre de fréquence acoustique SA1 de manière à obtenir une première fréquence estimée fie1 associée à un premier

facteur de pondération $\delta1$ et, d'autre part, dans le premier spectre de fréquence électrique SE1 de manière à obtenir une deuxième fréquence estimée fle2 associée à un deuxième facteur de pondération $\delta2$.

Pour déterminer la première fréquence d'intérêt prédéterminée f1, on réalise un calcul pondéré à partir des fréquences estimées f1e1, fle2 et des facteurs de pondération $\delta1$, $\delta2$. Dans cet exemple, le premier facteur de pondération $\delta1$ est supérieur au deuxième facteur de pondération $\delta2$ et il en résulte que la première fréquence estimée f1e1 est plus prise en compte que la deuxième fréquence estimée fle2 pour déterminer la fréquence d'intérêt prédéterminée f1. Toute fonction mathématique de pondération peut être mise en oeuvre, en particulier, une moyenne pondérée.

De manière avantageuse, une recherche d'une fréquence d'intérêt sur plusieurs spectres de fréquence permet de limiter l'imprécision. Cette imprécision est faible étant donné que les spectres de fréquence sont de différentes natures. Aussi, les spectres ne bénéficient pas d'un même biais de mesure, ce qui est avantageux. De préférence, une fréquence d'intérêt est associée à chaque spectre de fréquence avec un facteur de pondération.

De manière préférée, chaque fréquence d'intérêt correspond à une fréquence fondamentale du bruit tonal.

De manière préférée, pour déterminer une fréquence d'intérêt prédéterminée à basse et moyenne fréquence, on calcul une moyenne glissante sur le spectre de fréquence en définissant une fenêtre de valeur fixe prédéterminée. Cette moyenne glissante est retirée au spectre de fréquence pour mettre en exergue les pics. Une telle méthode est efficace lorsque la largeur des pics est quasi constante sur l'ensemble du spectre de fréquence.

A haute fréquence, lorsque la largeur des pics augmente, dans le spectre, on détecte les pics les plus émergents du spectre de fréquence puis on mesure pour chaque pic sa largeur à sa fréquence afin de former un échantillon.

Ensuite, on effectue une régression linéaire à partir des échantillons de manière à déterminer l'évolution de la largeur des pics en fonction de la fréquence. On obtient de manière avantageuse un polynôme, de préférence, linéaire.

On peut ainsi calculer une moyenne glissante sur le spectre de fréquence en définissant une fenêtre de valeur variable déterminée à partir de la régression linéaire, en particulier, du polynôme obtenu. La moyenne glissante n'est plus fixe mais varie sur le domaine fréquentiel proportionnellement à la largeur des pics. La moyenne glissante est ensuite retirée au spectre de fréquence pour mettre en exergue les pics et donc les fréquences d'intérêt.

Suite à l'étape de détermination ET3, on dispose avantageusement d'un jeu de fréquences d'intérêt JFI comprenant une pluralité de fréquences d'intérêt fg déterminées de manière précise.

En référence aux figures 2 et 3, le procédé comporte une étape de formation d'une base de spectres de défaut DB_DEF, chaque spectre de défaut S_DEFm étant obtenu par combinaison linéaire de fréquences d'intérêt fg dont les coefficients de pondération $\alpha g$, $\beta g$ sont prédéterminés. De préférence, les coefficients de pondération $\alpha g$, $\beta g$ sont déterminés par retour d'expérience.

Chaque spectre de défaut se présente sous la forme d'un ensemble de fréquences, c'est-à-dire, une distribution de fréquences. De manière préférée, chaque spectre de défaut se présente sous la forme d'un peigne de diracs pondérés.

Selon l'invention, chaque spectre de défaut S_DEFm comporte au moins une raie fréquentielle, chaque raie fréquentielle correspond à une combinaison linéaire de fréquences d'intérêt fg dont les coefficients de pondération sont prédéterminés. Une telle approche est pertinente lorsque les fréquences d'intérêt fg sont déterminées de manière précise. Une combinaison linéaire permet de mettre en avant les phénomènes d'interaction entre les diverses fréquences d'intérêt dans une machine tournante (phénomène de glissement).

A titre d'exemple, pour deux fréquences d'intérêt f1, f2, en référence à la [Fig.3], on détermine trois spectres de défaut S_DEF1, S_DEF2, S_DEF3 avec des coefficients de pondération $\alpha$, $\beta$ prédéterminés :

$$S\_DEF1 = R1\ (\alpha11xf1 + \beta11xf2) + R2\ (\alpha12xf1 + \beta12xf2)$$

$$S\_DEF2 = R1\ (\alpha21xf1 + \beta21xf2) + R2\ (\alpha22xf1 + \beta22xf2)$$

$$S\_DEF3 = R1\ (\alpha31xf1 + \beta31xf2) + R2\ (\alpha32xf1 + \beta32xf2)$$

Par souci de clarté, il n'a été représenté que deux raies par spectre de défaut mais il va de soi que leur nombre pourrait être différent. Du fait de la précision des fréquences d'intérêt f1, f2, chaque raie est déterminée de manière précise. Comme illustré à la [Fig.3], les raies R1, R2 sont éloignées pour les spectres de défaut S_DEF1 et S_DEF3 mais porches pour le spectre de défaut S_DEF2.

En référence aux figures 2 et 3, le procédé comporte une étape comparaison ET5 de chaque spectre de fréquence SAi, SEj, SVk à chaque spectre de défaut S_DEFm de manière à obtenir un score SCORE.

Lors de l'étape de comparaison d'un spectre de fréquence SAi, SEj, SVk à un spectre de défaut déterminé S_DEFm de manière à obtenir un score SCORE, on calcule un score élémentaire SCORE_E dans le spectre de fréquence

SAi, SEj, SVk pour chaque raie fréquentielle du spectre de défaut déterminé S_DEFm et on détermine le score SCORE à partir de l'ensemble des scores élémentaires SCORE_E. En particulier, on relève la hauteur tonale et large bande des raies.

A titre d'exemple, en référence à la [Fig.4A], on compare un spectre de fréquence SA1 au premier spectre de défaut S_DEF1 et on mesure l'énergie associée à chaque raie fréquentielle R1, R2 dans le spectre de fréquence SA1 de manière à obtenir deux scores élémentaires SCORE_E1, SCORE_E2. Dans cet exemple, le spectre de fréquence SA1 est représenté sous la forme d'une courbe continue mais il pourrait se présenter sous la forme de raies. Dans cet exemple, pour former le score SCORE pour le premier spectre de défaut S_DEF1, on réalise simplement une somme des scores élémentaires SCORE_E1, SCORE_E2 mais il va de soi que d'autres calculs mathématiques pourraient être mis en œuvre. Dans cet exemple, les scores élémentaires SCORE_E1, SCORE_E2 sont faibles (même nuls).

De manière analogue, en référence à la [Fig.4B], on compare le même spectre de fréquence SA1 au deuxième spectre de défaut S_DEF2 qui comportes des raies fréquentielles R1, R2 qui sont rapprochées. De manière avantageuse, on obtient un score élevé étant donné que chaque raie fréquentielle est considérée de manière indépendante, ce qui n'était pas possible avec un procédé selon l'art antérieur dans lequel seule l'énergie sur une plage de fréquence était mesurée. A la [Fig.4B], on a deux scores élémentaires SCORE_E1, SCORE_E2 de valeur importante et un score global SCORE moyen.

A titre d'exemple, la base de défauts DB_DEF comporte 4 défaut identifiés DEF1, DE2, DEF3, DEF4 identifiés. Dans cet exemple, on obtient une base de score DB_SCORE suivante dans laquelle un score est faible, moyen ou fort.

[Tableaux1]

|  | DEF1 | DEF2 | DEF3 | DEF4 | DEF5 |
|---|---|---|---|---|---|
| SA1 | Faible | Moyen | Faible | Faible | Fort |
| SE1 | Faible | Faible | Faible | Faible | Faible |
| SV1 | Faible | Moyen | Faible | Faible | Faible |

Le procédé comporte une étape de détermination ET6 du ou des défauts de la machine tournante par analyse des scores associés aux défauts dans la base de score DB_SCORE de manière à déterminer les défauts les plus probables. Dans le présent exemple, le défaut DEF5 est un défaut fort acoustique étant donné qu'il est visible uniquement sur le premier spectre acoustique SA1. Le défaut DEF2 est un défaut latent qui aurait pu être interprété comme du bruit ou une réplique du défaut DEF5. Sa caractérisation sur le premier spectre acoustique SA1 et sur le premier spectre vibratoire SV1 permet de le déterminer de manière pratique.

Grâce à l'invention, on dispose d'une vision globale qui permet de détecter des défauts faibles ou masqués. En outre, une analyse multicritère permet de mieux comprendre l'origine du dysfonctionnement. Dans le cas présent, le défaut DEF5 correspond à un défaut de roulement et une analyse simpliste conduirait à conclure que le roulement est défectueux en tant que tel. La détermination du défaut DEF2 relatif à un organe voisin permet de conclure à un défaut de montage ou d'installation du roulement, celui-ci n'étant en réalité pas défectueux en tant que tel.

De préférence, l'ensemble des défauts identifiés, associés à leurs spectres de fréquence, sont stockés dans une base de savoir afin de pouvoir être utilisés ultérieurement pour de la maintenance prédictive.

## Revendications

**1.** Procédé de détermination d'un ou plusieurs défauts d'une machine tournante d'aéronef (T), le procédé comportant :

• une étape de mesure (ET1) d'au moins un signal acoustique (Ai) et d'au moins un signal vibratoire (Vk) au cours d'une même phase de fonctionnement de la machine tournante (T),
• une étape de transformation (ET2) de chaque signal acoustique (Ai) et chaque signal vibratoire (Vk) respectivement en un spectre de fréquence acoustique (SAi) et un spectre de fréquence vibratoire (SVk) de manière à obtenir un ensemble de spectres de fréquence (SAi, SVk),
• une étape de détermination (ET3) d'un jeu de fréquences d'intérêt (JFI) dans l'ensemble des spectres de fréquence (SAi, SVk), chaque fréquence d'intérêt (fg) appartenant à un plage de fréquence prédéterminée (PFg),
• une étape de formation d'une base de spectres de défaut (DB_DEF), chaque spectre de défaut (S_DEFm) comportant au moins une raie fréquentielle (R1, R2), chaque raie fréquentielle (R1, R2) étant obtenue par combinaison linéaire de fréquences d'intérêt (fg) dont les coefficients de pondération ($\alpha,\beta$) sont prédéterminés,
• une étape de comparaison (ET5) de chaque spectre de fréquence (SAi, SVk) à chaque spectre de défaut

(S_DEFm) de manière à obtenir un score (SCORE) et
• une étape de détermination (ET6) du ou des défauts de la machine tournante (T) par analyse des scores obtenus (SCORE).

**2.** Procédé selon la revendication 1, d'une machine tournante d'aéronef (T) comportant au moins un équipement électrique (GE), le procédé comportant :

• une étape de mesure (ET1) d'au moins un signal acoustique (Ai), d'au moins un signal électrique (Ej) et d'au moins un signal vibratoire (Vk) au cours d'une même phase de fonctionnement de la machine tournante (T),
• une étape de transformation (ET2) de chaque signal acoustique (Ai), de chaque signal électrique (Ej) et de chaque signal vibratoire (Vk) respectivement en un spectre de fréquence acoustique (SAi), un spectre de fréquence électrique (SEj) et un spectre de fréquence vibratoire (SVk) de manière à obtenir un ensemble de spectres de fréquence (SAi, SEj, SVk).

**3.** Procédé selon l'une des revendications 1 à 2, dans lequel, au cours de l'étape de comparaison (ET5) d'un spectre de fréquence (SAi, SEj, SVk) à un spectre de défaut déterminé (S_DEFm) de manière à obtenir un score (SCORE), on calcule un score élémentaire (SCORE_E) dans le spectre de fréquence (SAi, SEj, SVk) pour chaque fréquence d'intérêt pondérée du spectre de défaut déterminé (S_DEFm) et on détermine le score (SCORE) à partir de l'ensemble des scores élémentaires (SCORE_E).

**4.** Procédé selon l'une des revendications 1 à 3, dans lequel, au cours de l'étape de détermination (ET3) d'un jeu de fréquences d'intérêt (JFI), au moins deux spectres de fréquence étant fonction d'au moins une fréquence d'intérêt prédéterminée (fg), :

• on détermine une première estimation de la fréquence d'intérêt prédéterminée dans un premier spectre de fréquence,
• on détermine une deuxième estimation de la fréquence d'intérêt prédéterminée dans un deuxième spectre de fréquence et
• on détermine la fréquence d'intérêt prédéterminée (fg) à partir d'au moins la première estimation de la fréquence d'intérêt prédéterminée et de la deuxième estimation de la fréquence d'intérêt prédéterminée.

**5.** Procédé selon l'une des revendications 1 à 4, dans lequel, l'étape de détermination (ET3) d'un jeu de fréquences d'intérêt (JFI) est réalisée à partir d'une base de liaison (DB_FI) qui associe au moins chaque fréquence d'intérêt à un ou plusieurs spectres de fréquence.

**6.** Procédé selon la revendication 5, dans lequel, la base de liaison (DB_FI) associe au moins chaque fréquence d'intérêt à un ou plusieurs spectres de fréquence avec un facteur de pondération ($\delta$).

**7.** Procédé selon l'une des revendications 1 à 6, dans lequel, au cours de l'étape de détermination (ET3) d'un jeu de fréquences d'intérêt (JFI) sur la plage de fréquence prédéterminée (PFI),

• on calcule une moyenne glissante sur un spectre de fréquence en définissant une fenêtre de valeur fixe prédéterminée.
• on retire la moyenne glissante fixe du spectre de fréquence pour déterminer au moins un pic correspondant à une fréquence d'intérêt.

**8.** Procédé selon l'une des revendications 1 à 7, dans lequel, au cours de l'étape de détermination (ET3) d'un jeu de fréquences d'intérêt (JFI) sur la plage de fréquence prédéterminée (PFI),

• on détecte les pics les plus émergents d'un spectre de fréquence,
• on mesure pour chaque pic sa largeur à sa fréquence afin de former un échantillon,
• on effectue une régression linéaire à partir des échantillons de manière à déterminer l'évolution de la largeur des pics en fonction de la fréquence,
• on calcule une moyenne glissante sur le spectre de fréquence en définissant une fenêtre de valeur variable déterminée à partir de la régression linéaire,
• on retire la moyenne glissante variable du spectre de fréquence pour déterminer au moins un pic correspondant à une fréquence d'intérêt.

9. Procédé selon l'une des revendications 2 à 8, dans lequel, le signal électrique (Ej) est mesuré dans l'équipement électrique (GE), de préférence, dans un moteur électrique.

10. Système pour la détermination d'un ou plusieurs défauts d'une machine tournante d'aéronef (T), le système comportant :

   • au moins un capteur acoustique (CAi) et au moins un capteur vibratoire (CVk) configurés pour mesurer respectivement au moins un signal acoustique (Ai) et au moins un signal vibratoire (Vk) au cours d'une même phase de fonctionnement de la machine tournante (T),
   • au moins un calculateur (ECU) configuré pour :

      transformer chaque signal acoustique (Ai) et chaque signal vibratoire (Vk) respectivement en un spectre de fréquence acoustique (SAi) et un spectre de fréquence vibratoire (SVk) de manière à obtenir un ensemble de spectres de fréquence (SAi, SVk),
      déterminer un jeu de fréquences d'intérêt (JFI) dans l'ensemble des spectres de fréquence (SAi, SVk), chaque fréquence d'intérêt (JFI) appartenant à une plage de fréquence prédéterminée (PFI),
      former une base de spectres de défaut (DB_DEF), chaque spectre de défaut (S_DEFm) comportant au moins une raie fréquentielle (R1, R2), chaque raie fréquentielle (R1, R2) étant obtenue par combinaison linéaire de fréquences d'intérêt (fg) dont les coefficients de pondération ($\alpha,\beta$) sont prédéterminés,
      comparer chaque spectre de fréquence (SAi, SVk) à chaque spectre de défaut (S_DEFm) de manière à obtenir un score (SCORE) et déterminer un ou des défauts de la machine tournante (T) par analyse des scores obtenus (SCORE).

11. Machine tournante d'aéronef (T) comportant un système selon la revendication 10.

**Patentansprüche**

1. Verfahren zur Bestimmung eines oder mehrerer Fehler in einer Drehmaschine eines Luftfahrzeugs (T), wobei das Verfahren aufweist:

   • einen Schritt des Messens (ET1) von mindestens einem akustischen Signal (Ai) und von mindestens einem Vibrationssignal (Vk) während derselben Betriebsphase der Drehmaschine (T),
   • einen Schritt des Umwandelns (ET2) jedes akustischen Signals (Ai) und jedes Vibrationssignals (Vk) jeweils in ein akustisches Frequenzspektrum (SAi) und ein Vibrationsfrequenzspektrum (SVk), um eine Gruppe von Frequenzspektren (SAi, SVk) zu erhalten,
   • einen Schritt des Bestimmens (ET3) eines Satzes interessierender Frequenzen (JFI) in der Gruppe der Frequenzspektren (SAi, SVk), wobei jede interessierende Frequenz (fg) zu einem vorbestimmten Frequenzbereich (PFg) gehört,
   • einen Schritt des Bildens einer Datenbank der Fehlerspektren (DB_DEF), wobei jedes Fehlerspektrum (S_DEFm) mindestens einen Frequenzstrahl (R1, R2) aufweist, wobei jeder Frequenzstrahl (R1, R2) durch lineare Kombination interessierender Frequenzen (fg) erhalten wird, deren Gewichtungskoeffizienten ($\alpha$, $\beta$) vorbestimmt sind,
   • einen Schritt des Vergleichens (ET5) jedes Frequenzspektrums (SAi, SVk) mit jedem Fehlerspektrum (S_DEFm), um einen Score (SCORE) zu erhalten, und
   • einen Schritt des Bestimmens (ET6) des oder der Fehler der Drehmaschine (T) durch Analyse der erhaltenen Scores (SCORE).

2. Verfahren nach Anspruch 1 einer Drehmaschine eines Luftfahrzeugs (T), die mindestens eine elektrische Ausrüstung (GE) aufweist, wobei das Verfahren aufweist:

   • einen Schritt des Messens (ET1) von mindestens einem akustischen Signal (Ai), von mindestens einem elektrischen Signal (Ej) und von mindestens einem Vibrationssignal (Vk) während derselben Betriebsphase der Drehmaschine (T),
   • einen Schritt des Umwandelns (ET2) jedes akustischen Signals (Ai), jedes elektrischen Signals (Ej) und jedes Vibrationssignals (Vk) jeweils in ein akustisches Frequenzspektrum (SAi), ein elektrisches Frequenzspektrum (SEj) und ein Vibrationsfrequenzspektrum (SVk), um eine Gruppe von Frequenzspektren (SAi, SEj, SVk) zu erhalten.

3. Verfahren nach einem der Ansprüche 1 bis 2, wobei während des Schritts des Vergleichens (ET5) eines Frequenzspektrums (SAi, SEj, SVk) mit einem bestimmten Fehlerspektrum (S_DEFm), um einen Score (SCORE) zu erhalten, ein elementarer Score (SCORE_E) in dem Frequenzspektrum (SAi, SEj, SVk) für jede gewichtete interessierende Frequenz des bestimmten Fehlerspektrums (S_DEFm) berechnet und der Score (SCORE) ausgehend von der Gruppe der elementaren Scores (SCORE_E) bestimmt wird.

4. Verfahren nach einem der Ansprüche 1 bis 3, wobei während des Schritts des Bestimmens (ET3) eines Satzes interessierender Frequenzen (JFI) mindestens zwei Frequenzspektren von mindestens einer vorbestimmten interessierenden Frequenz (fg) abhängen:

   • Bestimmen einer ersten Schätzung der vorbestimmten interessierenden Frequenz in einem ersten Frequenzspektrum,
   • Bestimmen einer zweiten Schätzung der vorbestimmten interessierenden Frequenz in einem zweiten Frequenzspektrum und
   • Bestimmen der vorbestimmten interessierenden Frequenz (fg) ausgehend von mindestens der ersten Schätzung der vorbestimmten interessierenden Frequenz und der zweiten Schätzung der vorbestimmten interessierenden Frequenz.

5. Verfahren nach einem der Ansprüche 1 bis 4, wobei der Schritt des Bestimmens (ET3) eines Satzes interessierender Frequenzen (JFI) ausgehend von einer Verbindungsdatenbank (DB_FI) durchgeführt wird, die mindestens jede interessierende Frequenz einem oder mehreren Frequenzspektren zuordnet.

6. Verfahren nach Anspruch 5, wobei die Verbindungsdatenbank (DB_FI) mindestens jeder interessierenden Frequenz einem oder mehreren Frequenzspektren mit einem Gewichtungsfaktor ($\delta$) zuordnet.

7. Verfahren nach einem der Ansprüche 1 bis 6, wobei während des Schritts des Bestimmens (ET3) eines Satzes interessierender Frequenzen (JFI) für den vorbestimmten Frequenzbereich (PFI)

   • ein gleitender Mittelwert für ein Frequenzspektrum berechnet wird, indem ein vorbestimmtes Festwertfenster bestimmt wird,
   • der feste gleitende Mittelwert des Frequenzspektrums entfernt wird, um mindestens eine Spitze zu bestimmen, die einer interessierenden Frequenz entspricht.

8. Verfahren nach einem der Ansprüche 1 bis 7, wobei während des Schritts des Bestimmens (ET3) eines Satzes interessierender Frequenzen (JFI) für den vorbestimmten Frequenzbereich (PFI)

   • die höchsten Spitzen eines Frequenzspektrums ermittelt werden,
   • für jede Spitze deren Breite in ihrer Frequenz gemessen wird, um ein Muster zu bilden,
   • eine lineare Regression ausgehend von den Mustern durchgeführt wird, um die Entwicklung der Breite der Spitzen in Abhängigkeit von der Frequenz zu bestimmen,
   • ein gleitender Mittelwert für ein Frequenzspektrum berechnet wird, indem ein Fenster mit einem variablen Wert ausgehend von der linearen Regression bestimmt wird,
   • der variable gleitende Mittelwert des Frequenzspektrums entfernt wird, um mindestens eine Spitze zu bestimmen, die einer interessierenden Frequenz entspricht.

9. Verfahren nach einem der Ansprüche 2 bis 8, wobei das elektrische Signal (Ej) in der elektrischen Ausrüstung (GE), vorzugsweise in einem Elektromotor, gemessen wird.

10. System zur Bestimmung eines oder mehrerer Fehler einer Drehmaschine eines Luftfahrzeugs (T), wobei das System aufweist:

   • mindestens einen akustischen Sensor (CAi) und mindestens einen Vibrationssensor (CVk), die dazu ausgelegt sind, jeweils mindestens ein akustisches Signal (Ai) und mindestens ein Vibrationssignal (Vk) während derselben Betriebsphase der Drehmaschine (T) zu messen,
   • mindestens einen Rechner (ECU), der ausgelegt ist, um:

      jedes akustische Signal (Ai) und jedes Vibrationssignals (Vk) jeweils in ein akustisches Frequenzspektrum (SAi) und ein Vibrationsfrequenzspektrum (SVk) umzuwandeln, um eine Gruppe von Frequenzspektren (SAi, SVk) zu erhalten,
einen Satz interessierender Frequenzen (JFI) in der Gruppe der Frequenzspektren (SAi, SVk) zu bestimmen, wobei jede interessierende Frequenz (JFI) zu einem vorbestimmten Frequenzbereich (PFI) gehört, eine Datenbank der Fehlerspektren (DB_DEF) zu bilden, wobei jedes Fehlerspektrum (S_DEFm) mindestens einen Frequenzstrahl (R1, R2) aufweist, wobei jeder Frequenzstrahl (R1, R2) durch lineare Kombination interessierender Frequenzen (fg) erhalten wird, deren Gewichtungskoeffizienten ($\alpha$, $\beta$) vorbestimmt sind, jedes Frequenzspektrum (SAi, SVk) mit jedem Fehlerspektrum (S_DEFm) zu vergleichen, um einen Score (SCORE) zu erhalten, und
einen Fehler oder Fehler der Drehmaschine (T) durch Analyse der erhaltenen Scores (SCORE) zu bestimmen.

11. Drehmaschine eines Luftfahrzeugs (T), aufweisend ein System nach Anspruch 10.

**Claims**

1. A method for determining one or more defects of an aircraft rotating machine (T), the method comprising:

   • a step (ET1) of measuring at least one acoustic signal (Ai) and at least one vibratory signal (Vk) during the same operating phase of the rotating machine (T),
   • a step (ET2) of converting each acoustic signal (Ai) and each vibratory signal (Vk) into an acoustic frequency spectrum (SAi) and a vibratory frequency spectrum (SVk) respectively, so as to obtain all the frequency spectra (SAi, SVk),
   • a step (ET3) of determining a set of frequencies of interest (JFI) in all the frequency spectra (SAi, SVk), each frequency of interest (fg) belonging to a predetermined frequency range (PFg),
   • a step of forming a defect spectra base (DB_DEF), each defect spectrum (S_DEFm) comprising at least one frequency line (R1, R2), each frequency line (R1, R2) being obtained by linear combination of frequencies of interest (fg) the weighting coefficients ($\alpha$, $\beta$) of which are predetermined,
   • a step (ET5) of comparing each frequency spectrum (SAi, SVk) with each defect spectrum (S_DEFm) to obtain a score (SCORE) and
   • a step (ET6) of determining the defect(s) of the rotating machine (T) by analyzing the scores obtained (SCORE).

2. The method according to claim 1, of an aircraft rotating machine (T) comprising at least one piece of electrical equipment (GE), the method comprising:

   • a step (ET1) of measuring at least one acoustic signal (Ai), at least one electrical signal (Ej) and at least one vibratory signal (Vk) during a same operating phase of the rotating machine (T),
   • a step (ET2) of converting each acoustic signal (Ai), each electrical signal (Ej) and each vibratory signal (Vk) into an acoustic frequency spectrum (SAi), an electrical frequency spectrum (SEj) and a vibratory frequency spectrum (SVk) respectively, so as to obtain all the frequency spectra (SAi, SEj, SVk).

3. The method according to one of claims 1 to 2, wherein, during the step of comparing (ET5) a frequency spectrum (SAi, SEj, SVk) with a determined defect spectrum (S_DEFm) so as to obtain a score (SCORE), an elementary score (SCORE_E) is calculated in the frequency spectrum (SAi, SEj, SVk) for each weighted frequency of interest of the determined defect spectrum (S_DEFm) and the score (SCORE) is determined from all the elementary scores (SCORE_E).

4. The method according to one of claims 1 to 3, wherein, in the step of determining (ET3) a set of frequencies of interest (JFI), at least two frequency spectra being a function of at least one predetermined frequency of interest (fg):

   • a first estimate of the predetermined frequency of interest in a first frequency spectrum is determined,
   • a second estimate of the predetermined frequency of interest in a second frequency spectrum is determined, and
   • the predetermined frequency of interest (fg) is determined from at least the first estimate of the predetermined frequency of interest and the second estimate of the predetermined frequency of interest.

5. The method according to one of claims 1 to 4, wherein the step for determining (ET3) a set of frequencies of interest (JFI) is carried out from a link base (DB_FI) which associates at least each frequency of interest with one or more frequency spectra.

6. The method according to claim 5, wherein, the link base (DB_FI) associates at least each frequency of interest with one or more frequency spectra with a weighting factor ($\delta$).

7. The method according to one of claims 1 to 6, wherein, during the step for determining (ET3) a set of frequencies of interest (JFI) over the predetermined frequency range (PFI),

   • a sliding average is calculated over a frequency spectrum by defining a predetermined fixed-value window.
   • the fixed sliding average is removed from the frequency spectrum to determine at least one peak corresponding to a frequency of interest.

8. The method according to one of claims 1 to 7, wherein, during the step (ET3) for determining a set of frequencies of interest (JFI) over the predetermined frequency range (PFI),

   • the most emergent peaks of a frequency spectrum are detected,
   • the width of each peak at its frequency is measured to form a sample,
   • a linear regression is performed on the samples to determine the evolution of the width of the peaks as a function of the frequency,
   • a sliding average is calculated over the frequency spectrum by defining a variable-value window determined from the linear regression,
   • the variable sliding average is removed from the frequency spectrum to determine at least one peak corresponding to a frequency of interest.

9. The method according to one of claims 2 to 8, wherein the electrical signal (Ej) is measured in the electrical equipment (GE), preferably in an electric motor.

10. A system for determining one or more defects in an aircraft rotating machine (T), the system comprising:

   • at least one acoustic sensor (CAi) and at least one vibratory sensor (CVk) configured to measure respectively at least one acoustic signal (Ai) and at least one vibratory signal (Vk) during a same operating phase of the rotating machine (T),
   • at least one computer (ECU) configured to:

      convert each acoustic signal (Ai) and each vibratory signal (Vk) into an acoustic frequency spectrum (SAi) and a vibratory frequency spectrum (SVk) respectively, so as to obtain all the frequency spectra (SAi, SVk),
      determine a set of frequencies of interest (JFI) from all the frequency spectra (SAi, SVk), each frequency of interest (JFI) belonging to a predetermined frequency range (PFI),
      form a defect spectra base (DB_DEF), each defect spectrum (S_DEFm) comprising at least one frequency line (R1, R2), each frequency line (R1, R2) being obtained by linear combination of frequencies of interest (fg) the weighting coefficients ($\alpha$, $\beta$) of which are predetermined,
      compare each frequency spectrum (SAi, SVk) with each defect spectrum (S_DEFm) to obtain a score (SCORE) and
      determine one or more defects in the rotating machine (T) by analyzing the scores obtained (SCORE).

11. An aircraft rotating machine (T) comprising a system according to claim 10.

[Fig. 1]

A

T

T

CA

GE    T

FIG. 1

CE    ECU    CV

[Fig. 2]

```
                    ┌──────────┐
                    │   ET1    │
                    └──────────┘
                         │
                  Ai, Ej, Vk
                         │
                         ▼
                    ┌──────────┐          SAi, SEj, SVk
                    │   ET2    │─────────────────────────┐
                    └──────────┘                         │
                         │                               │
                  SAi, SEj, SVk                          │
   ┌────────┐            │                JFI            │
   │ DB_FI  │            ▼                               ▼
   │        │       ┌──────────┐     ⭕           ┌──────────┐
   │        │──────▶│   ET3    │──▶ f1,f2, fg ──▶│   ET4    │
   └────────┘       └──────────┘                  └──────────┘
                                                        │
                                         SARi, SERj, SVRk
                                                        │         ┌────────┐
                                                        ▼         │ DB_DEF │
                                                   ┌──────────┐   │        │
                                                   │   ET5    │◀─▶│        │
                                                   └──────────┘   └────────┘
                                                        │
                                                     SCORE
                                                        │
                                                        ▼
                                   ┌──────────┐     ┌────────┐
                                   │   ET6    │◀───▶│ DB_SCORE│
                                   └──────────┘     └────────┘
                                        │
                                       DEF
                                        │
                                        ▼
```

FIG. 2

[Fig. 3]

S_DEF1

S_DEF2

S_DEF3

FIG. 3

[Fig. 4A]

SA1

S_DEF1

FIG. 4A

[Fig. 4B]

SA1

S_DEF2

FIG. 4B

[Fig. 5]

FIG. 5

**EP 4 264 205 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018222341 A1
- EP 2693176 A1
- FR 2952177 A1